# EUROPEAN PATENT SPECIFICATION

(11) **EP 3 138 451 B1**
(45) Date of publication and mention of the grant of the patent: **20.06.2018**
(21) Application number: 16183890.9
(22) Date of filing: 11.08.2016
(51) Int. Cl.: A47J 43/28

(54) **CONVERTIBLE COOKING UTENSIL**
UMWANDELBARES KOCHUTENSIL
USTENSILE DE CUISSON CONVERTIBLE

(30) Priority: 12.08.2015 GB 201514310
(43) Date of publication of application: 08.03.2017
(73) Proprietor: Kenwood Limited, Havant, Hampshire PO9 2NH (GB)
(72) Inventor: Fields, Robert, Havant, Hampshire PO9 2NH (GB)
(74) Representative: Hector, Annabel Mary

(56) References cited:
- GB-A- 2 052 246
- US-A1- 2008 072 432

## Description

The present invention relates to kitchen utensils. More particularly, the present invention relates to kitchen utensils, such as spatulas and spoons, used for mixing and stirring food items in a pan or bowl. State of the art documents relating to kitchen equipment are: US2008072432, GB2052246. It is an object of the disclosure to provide an improved kitchen utensil.

According to one aspect of the invention, there is provided a utensil comprising a flexible silicone rubber spatula, the flattened section at the end of the spatula being operable to become concave so as to function as a spoon. If a flatter utensil is required then the process can be reversed and the concave section flattened back into a spatula. The transformation can be triggered using a button or lever within the handle of the device, and can be locked or latched in place keeping the new shape constant without additional effort or action from the user. This allows the user to have two commonly used utensil functions in one product.

The invention extends to any novel aspects or features described and/or illustrated herein.

The invention extends to methods and/or apparatus substantially as herein described and/or as illustrated with reference to the accompanying drawings.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

The present invention is now described, purely by way of example, with reference to the accompanying diagrammatic drawings, in which:-
Figures 1 show a utensil in a first configuration;
Figures 2 show the utensil in a first configuration without a flexible jacket; and
Figures 3 show the utensil in a second configuration.

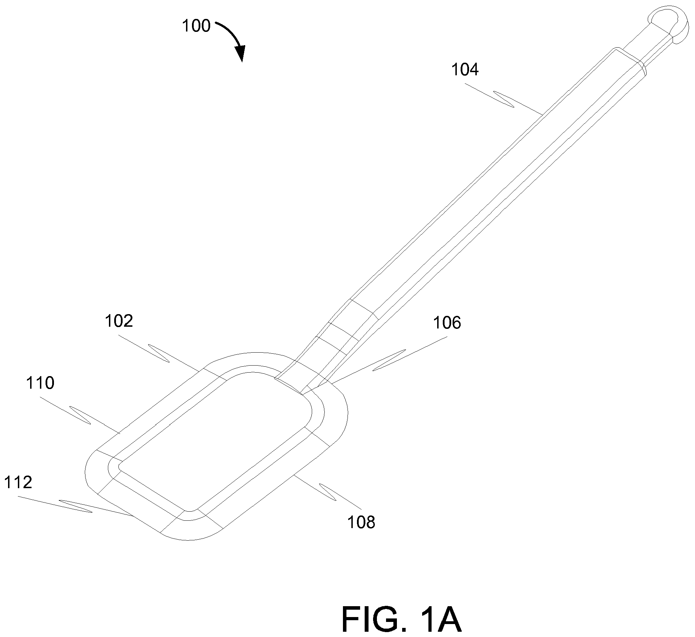

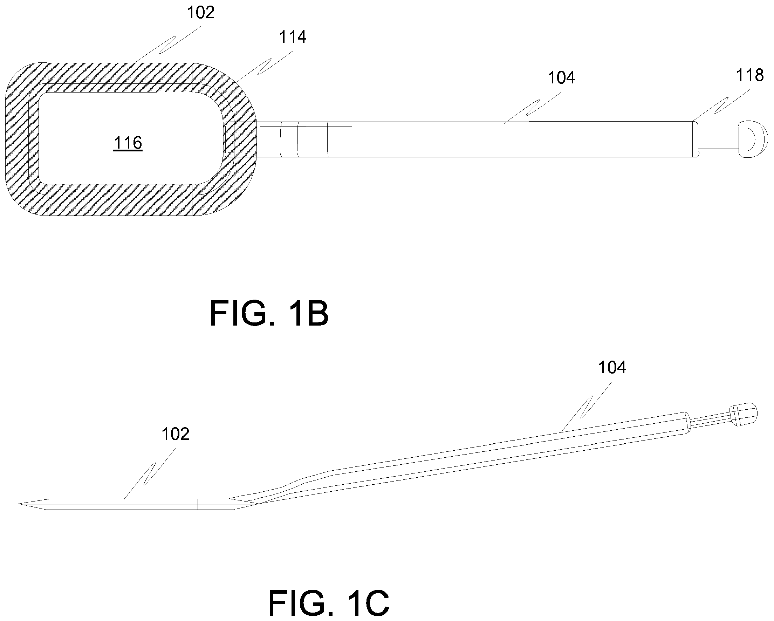

Referring to Figures 1A, 1B and 1C there is shown the utensil 100 in the first configuration. In the first configuration, the utensil 100 is shaped like a spatula with a spatula head 102 and a handle 104. Figure 1A shows a perspective view of the utensil 100. Figure 1B shows a top view of the utensil 100 and Figure 1C shows a side view of the utensil 100. The spatula head 102 has a flat plate-like body as shown in Fig. 1C. In alternate embodiments, the spatula head 102 may be preformed into a curved or any other suitable shape. The spatula head 102 includes a top end 106, two spaced longitudinal sides 108, 110, and a bottom end 112. The spatula head 102 may have tapered edges to allow easy picking up of food.

Further, the spatula head 102 includes a flexible jacket, the shape of which is supported by the outer frame 114. The flexible jacket may be made of silicone rubber. An outer frame 114 is essentially a rectangular frame with rounded corners shown as the shaded portion in Fig. 1B. However, the shape of the outer frame 114 and the spatula head 102 may be any other suitable geometric shape such as a square, an oval and/or a circle. The spatula head 102 largely acquires the shape of the outer frame 114. Since a middle portion 116 of the outer frame 114 is hollow; the flexible jacket can be stretched into and out of the middle portion 116.

Further, the outer frame 114 may be made of stainless steel or any other suitable metal or high temperature moulded plastic such as nylon or Ultem. The outer frame 114 is flexible such that it resumes its shape after being flexed when used to mix, spread, slice, scrape or lift food items. Further, the outer frame 114 may have a bevelled sharp edge near the bottom end 112 which provides a tapered edge to the spatula head 102. Further, the bottom end 112 has a receptacle for attachments including a soft flexible edge, a hard metal scraping edge, a straight semi-hard scraping edge and a curved semi-hard scraping edge. This allows the utensil 100 to have versatility in being able to be used to handle a multitude of kitchen tasks.

The handle 104 is made of a rigid or slightly flexible material such as wood, plastic, metal or ceramic. The handle 104 is connected to the outer frame 114. For example, the handle 104 is riveted to the outer frame 114. The handle 104 and the spatula head 102 are collinear or are connected at any suitable angle as shown in Fig 1C. Further, there is a step between the handle 104 and the spatula head 102. There is also a hole in a rear end 118 of the handle 104 or any other part of the utensil 100 to enable hanging of the utensil 100.

The utensil 100 is, in one example, manufactured by over-moulding plastic components in silicone rubber. This is performed for the spatula head 102 and/or the entire utensil 100 including the handle 104. The over-moulding process ensures that there are no crevasses at joints to collect dirt. Further, silicone rubber is a heat-resistant material and does not scrape the non-sticking coating of pots and pans. This helps in prolonging the service life of non-sticking pots and pans and to make the washing of such pots and pans easy. In other examples, the spatula head 102, the handle 104, and the outer frame 114, are made from different materials, including but not limited to metal, stainless steel, aluminium, wood, ceramic, and/or plastic. The materials used to make the utensil 100 are dishwasher safe.

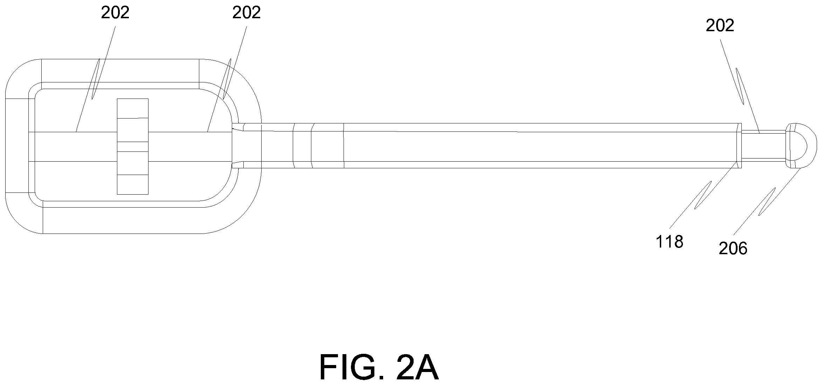

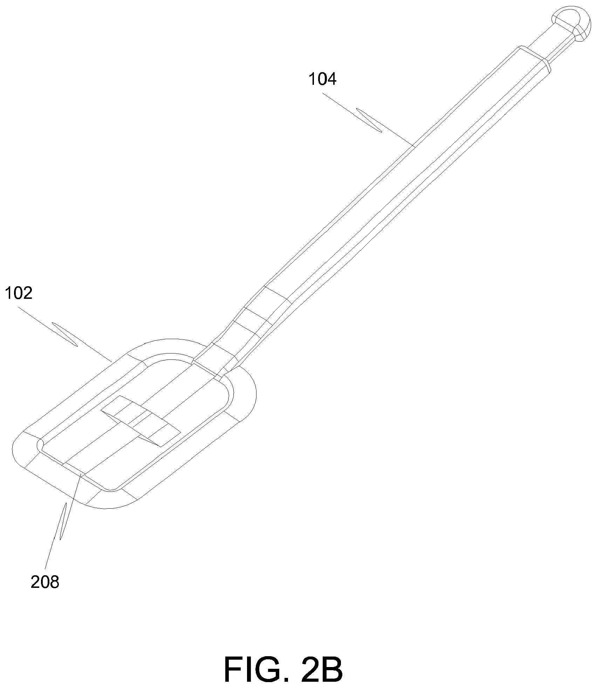

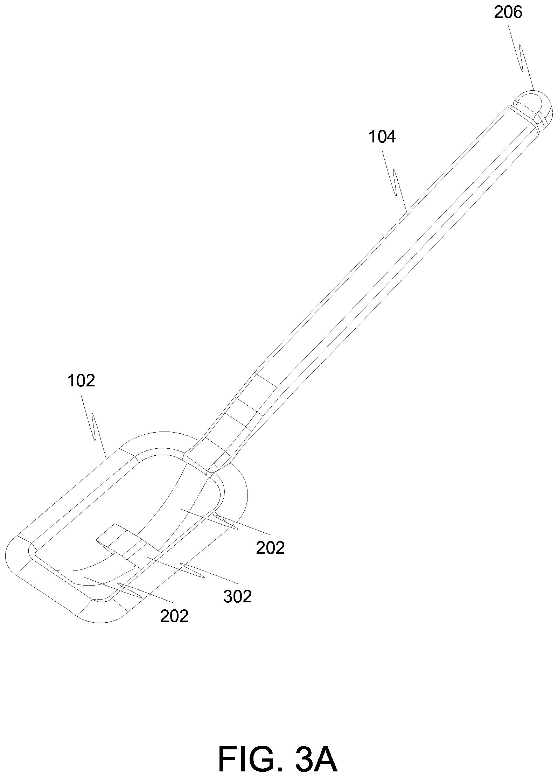

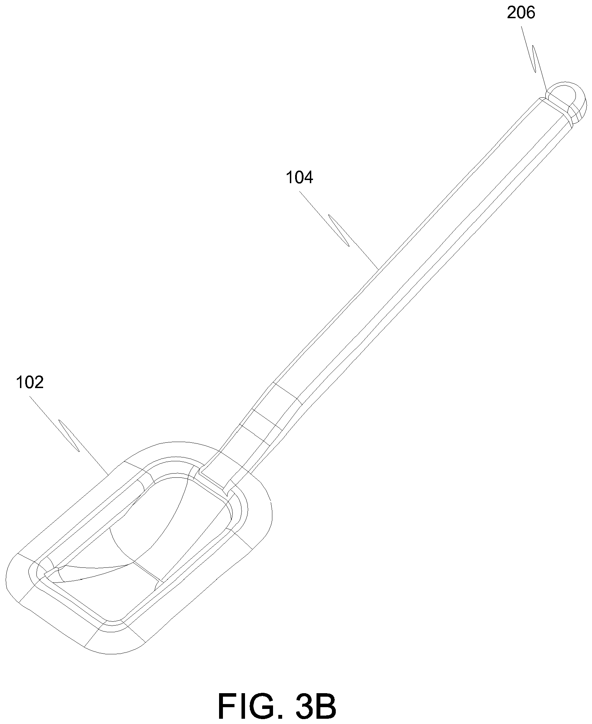

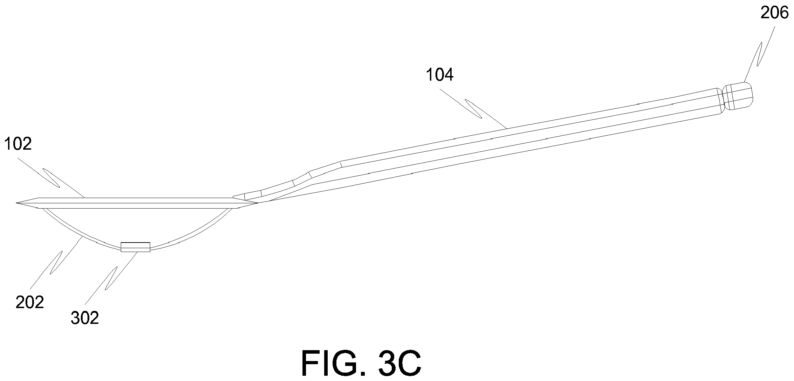

Now referring to Figs. 2A and 2B. Fig. 2A shows a top view of the utensil 100 in the first configuration without the flexible jacket and Fig. 2B shows a perspective view of the utensil 100. The handle 104 includes a hollow passage (not shown) extending from one end to the opposite end along the length of the handle 104. A spine element 202 is placed in the hollow passage, such that it extends from the rear end 118 of the handle 104, passing through the opposite end of the handle 104 and reaching the outer frame 114 (near the bottom end 112). The spine element 202 is a thin sheet of plastic or metal with appropriate width such that it can pass through the hollow passage. A button 206 is attached to the rear end of the spine element 202 near the rear end 118 of the handle 104. When the button 206 is pressed such that the spine element 202 is pushed inside the hollow passage, the portion of the spine element 202 that extends between the top end 106 and the bottom end 112 is forced into a curved shape as shown in Fig. 3A. This forces the spatula head 102 to take the shape of a spoon as shown in Fig. 3B and 3C. The spoon shape is the second configuration of the utensil 100. Further, a user may pull the button 206 away from the rear end 118 of the handle 104 to convert the utensil 100 from the second configuration back to the first configuration.

In some examples, there is provided an additional rib 302 attached to an interior surface of the flexible jacket such that the spine element 202 slides through the rib 302. The rib 302 ensures that the flexible jacket moves along with the spine element 202. This helps to form a consistent spoon shape in the flexible silicone rubber spatula. In alternate embodiments, multiple ribs are used to get an effective spoon shape. These ribs 302 are tethered at either end to the outer frame 114.

The ribs 302 may protrude slightly from a bottom of the spatula head 102 when the spine element 202 is in a first configuration to allow the bottom of the spatula head 102 to be used as a scraper. The ribs 302 may also protrude slightly from the top of the spatula head 102 to improve grip on items held by the spatula head 102.

Yet further, a hinge 208 is used to join the spine element 202 to the outer frame 114 near the bottom end 112. The hinge 208 enables a deep spoon shape to be formed when the spine element 202 is bent. The hinge 208 is a mechanical hinge or a moulded hinge if the outer frame 114 and the spine element 202 are moulded as one piece. The hinge 208 also forms part of the outer frame 114.

In other examples, the spine element 202 is moved by mechanisms including, but not limited to levers, gears, hinges, and/or other similar mechanisms. Alternatively, the friction between the spine element 202 and the handle 104is sufficiently low that filing food into the spatula head 102 causes the spine element 202 to be pushed from the first configuration into the second configuration.

Further, in alternate examples, to keep the spine element 202 in the bent position (in the second configuration), the spine element 202 is held in the depressed position by an over-centre mechanism, a physical latch, a button, friction, and/or other similar locking devices. When the locking device is released, the spine element 202 straightens and the first configuration is attained. A similar over-centre mechanism, physical latch, button, friction and/or other similar locking device holds the spine element 202 in the straightened position (the first configuration).

In yet a further example, a resilient element, such as a helical spring located around the spine element 202 within the handle 104, is attached to the handle 104 and the spine element 202 to assist returning the spine element to the first configuration by urging the spine element 202 towards a straightened position.

Alternatively the spine element 202 is held in the bent position by a resilient element such as a helical spring located around the spine element 202 within the handle 104. In this example, the user would pull the button 206 to move the spine element 202 to the first configuration, and when the button 206 is released or unlatched the resilient element urges the spine element 202 back to the second configuration.

Yet further, by controlling or measuring the bending of the spine element 202, the utensil 100 can also be used as a measuring spoon in the second configuration. For example, the spine element 202 has graduation marks indicating the volume of the hollow formed in the spatula head 102 depending on how far the spine element 202 is pushed into the hollow passage in the handle 104.

Moreover, to ensure that the spine element 202 forces the flexible silicone rubber into a good spoon shape, the flexible silicone rubber is overmolded to the spine element 202. This should allow the spine element 202 to slide through the flexible silicone rubber as needed. This is achieved through the specific locational use of release agent or by careful surface finishing of the surface of the spine.

The spine element 202, the handle 104 and the outer frame 114 are made as a single component where the handle 104 and the outer frame 114 are formed by two halves that when brought together to enclose the spine element 202. The two halves could snap together or be connected by any other suitable common joint method (including but limited to a screw, a bolt, ultrasonic welding, and/or glue).

When used in the second configuration ("the spoon"), the utensil 100 can be used for scooping materials, for example rice or ice cream. The utensil 100 is convertible from the second configuration (the spoon) to the first configuration ("the spatula") to release the foodstuff material.

In a further example, the utensil 100 is transformable between more than two configurations, by controlling the bending of the spine element 202 to vary the depth of the spoon. This allows the user to use the utensil 100 as a shallow spoon to lift small portions of food items (for example, for tasting food) and as a deep spoon to lift large portions of food items (for example, for moving the food items from a cooking vessel to a dinner plate).

The proposed solution has the advantages of in that it is both a spatula and a spoon and that either function operates as effectively as an individual item. The user is able to select what function they want without any compromises. The proposed design allows the variance of the size of the spoon to be used as a measuring device. The proposed solution will stay set in either spoon or spatula mode until the user wishes to change. The proposed design makes no sacrifices to the usability of either function whilst achieving a versatile two mode design, the handle does not need to be changed or modified to allow the changing from one mode to another.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

For example, the utensil may be manufactured by way of '3D printing' whereby a three-dimensional model of the surface is supplied, in machine readable form, to a '3D printer' adapted to manufacture the housing or apparatus. This may be by additive means such as extrusion deposition, Electron Beam Freeform Fabrication (EBF), granular materials binding, lamination, photopolymerization, or stereolithography or a combination thereof. The machine readable model comprises a spatial map of the object or pattern to be printed, typically in the form of a Cartesian coordinate system defining the object's or pattern's surfaces. This spatial map may comprise a computer file which may be provided in any one of a number of file conventions. One example of a file convention is a STL (STereoLithography) file which may be in the form of ASCII (American Standard Code for Information Interchange) or binary and specifies areas by way of triangulated surfaces with defined normals and vertices. An alternative file format is AMF (Additive Manufacturing File) which provides the facility to specify the material and texture of each surface as well as allowing for curved triangulated surfaces. The mapping of the surface may then be converted into instructions to be executed by 3D printer according to the printing method being used. This may comprise splitting the model into slices (for example, each slice corresponding to an x-y plane, with successive layers building the z dimension) and encoding each slice into a series of instructions. The instructions sent to the 3D printer may comprise Numerical Control (NC) or Computer NC (CNC) instructions, preferably in the form of G-code (also called RS-274), which comprises a series of instructions regarding how the 3D printer should act. The instructions vary depending on the type of 3D printer being used, but in the example of a moving printhead the instructions include: how the printhead should move, when / where to deposit material, the type of material to be deposited, and the flow rate of the deposited material.

The apparatus or housing as described herein may be embodied in one such machine readable model, for example a machine readable map or instructions, for example to enable a physical representation of said housing or apparatus to be produced by 3D printing. This may be in the form of a software code mapping of the housing or surface and/or instructions to be supplied to a 3D printer (for example numerical code).

Any system feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to system aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

## Claims

1. A kitchen utensil (100), comprising:
a handle (104); an operational end for preparing food, wherein the operational end is transformable between a first configuration comprising a spoon (202) and a second configuration comprising a spatula head (102); and a retaining mechanism (206) arranged to retain the operational end in at least one of the first and second configurations.

2. A kitchen utensil according to claim 1, further comprising an actuator arranged to affect the transformation of the utensil between the first and second configurations.

3. A kitchen utensil according to any preceding claim, wherein the operational end comprises:
a frame; and
a deformable membrane coupled to the frame, the membrane forming a working surface of the operational end.

4. A kitchen utensil according to claim 3, further comprising a transforming member operable by the actuator to deform the deformable membrane in order to transform the operational end between the first and second configurations.

5. A kitchen utensil according to any preceding claim, wherein the transforming member comprises a spine element, operable by the actuator to adopt a substantially curved shape in the first configuration, and further operable by the actuator to adopt a substantially straight shape in the second configuration.

6. A kitchen utensil according to claim 5, wherein a rib or a cross-joint is coupled to the deformable membrane and/or the spine, wherein the rib or the cross-joint is arranged to be deformed by the spine, and/or is arranged substantially perpendicularly to the transforming member.

7. A kitchen utensil according to claim 5, wherein the spine element is housed in a channel in the deformable membrane, and wherein the transforming member is arranged to deform the deformable membrane by being translated into the deformable membrane or by being translated away from the deformable membrane.

8. A kitchen utensil according to any preceding claim, wherein the deformable membrane comprises a resilient material, preferably an elastomeric material, and more preferably comprises: rubber; silicone; plastic; wood; and/or metal.

9. A kitchen utensil according to any preceding claim, wherein the transforming member is flexible, and preferably wherein the transforming member is formed from wood, plastic and/or metal.

10. A kitchen utensil according to any preceding claim, wherein the handle houses the actuator and/or the transforming member and/or the locking mechanism, and preferably wherein the actuator and/or transforming member protrudes from an end of the handle, and is arranged to be freely translated within the handle along its length.

11. A kitchen utensil according to any preceding claim, wherein the transforming member is coupled, preferably pivotally, to the rigid frame.

12. A kitchen utensil according to any preceding claim, wherein the actuator is coupled to the transforming member, wherein the actuator is arranged to be translated towards or away from the handle and/or the operational end.

13. A kitchen utensil according to any preceding claim, wherein the locking mechanism comprises: an over-centre mechanism; a physical latch; a button; and/or means for opposing the transformation of the operational end into a spoon head and/or spatula head by friction.

14. A kitchen utensil according to any preceding claim, wherein the frame is formed from: wood; stainless steel; and/or moulded plastic.

15. A kitchen utensil according to any preceding claim, comprising at least one graduation mark indicating a position of the actuator which corresponds to a predetermined volume when the operational end is arranged in the first configuration, and preferably wherein the locking member is arranged to retain the spoon head in at least two different positions corresponding to different volumes.

## Patentansprüche

1. Küchengerät (100), das Folgendes umfasst:
einen Griff (104); ein Betriebsende für die Zubereitung von Lebensmitteln, wobei das Betriebsende zwischen einer ersten Konfiguration, die einen Löffel (202) umfasst, und einer zweiten Konfiguration, die einen Spatelkopf (102) umfasst, umgeformt werden kann; und einen Rückhaltemechanismus (206), der dafür ausgelegt ist, das Betriebsende in mindestens einer der ersten und zweiten Konfigurationen zu halten.

2. Küchengerät nach Anspruch 1, das ferner ein Stellglied umfasst, das dafür ausgelegt ist, die Umformung des Geräts zwischen der ersten und der zweiten Konfiguration zu beeinflussen.

3. Küchengerät nach einem der vorhergehenden Ansprüche, wobei das Betriebsende Folgendes umfasst:
einen Rahmen; und
eine verformbare Membran, die mit dem Rahmen gekoppelt ist, wobei die Membran eine Arbeitsfläche des Betriebsendes bildet.

4. Küchengerät nach Anspruch 3, das ferner ein Umformelement umfasst, das durch den Stellglied betätigt werden kann, um die verformbare Membran zu verformen, um das Betriebsende zwischen der ersten und der zweiten Konfiguration umzuformen.

5. Küchengerät nach einem der vorhergehenden Ansprüche, wobei das Umformelement ein Rückgratelement umfasst, das durch den Stellglied betätigt werden kann, um in der ersten Konfiguration eine im Wesentlichen gekrümmte Form anzunehmen, und ferner durch das Stellglied betätigt werden kann, um in der zweiten Konfiguration eine im Wesentlichen gerade Form anzunehmen.

6. Küchengerät nach Anspruch 5, wobei eine Rippe oder eine Kreuzverbindung mit der verformbaren Membran und/oder dem Rückgrat verbunden ist, wobei die Rippe oder die Kreuzverbindung so angeordnet ist, dass sie durch das Rückgrat verformt wird, und/oder im Wesentlichen senkrecht zu dem Umformelement angeordnet ist.

7. Küchengerät nach Anspruch 5, wobei das Rückenelement in einem Kanal in der verformbaren Membran untergebracht ist und wobei das Umformelement dafür ausgelegt ist, die verformbare Membran zu verformen, indem es in die verformbare Membran bewegt wird oder indem es von der verformbaren Membran weg bewegt wird.

8. Küchengerät nach einem der vorhergehenden Ansprüche, wobei die verformbare Membran ein elastisches Material, vorzugsweise ein elastomeres Material, umfasst und bevorzugter Folgendes umfasst: Gummi, Silikon, Kunststoff, Holz, und/oder Metall.

9. Küchengerät nach einem der vorhergehenden Ansprüche, wobei das Umformelement flexibel ist und vorzugsweise wobei das Umformelement aus Holz, Kunststoff und/oder Metall gebildet ist.

10. Küchengerät nach einem der vorhergehenden Ansprüche, wobei der Griff das Stellglied und/oder das Umformelement und/oder den Verriegelungsmechanismus aufnimmt und vorzugsweise wobei das Stellglied und/oder das Umformelement von einem Ende des Griffs vorsteht und dafür ausgelegt ist, innerhalb des Griffs entlang seiner Länge frei umgeformt zu werden.

11. Küchengerät nach einem der vorhergehenden Ansprüche, wobei das Umformelement vorzugsweise schwenkbar an den starren Rahmen gekoppelt ist.

12. Küchengerät nach einem der vorhergehenden Ansprüche, wobei das Stellglied mit dem Umformelement gekoppelt ist, wobei das Stellglied dafür ausgelegt ist, zum Griff und/oder zum Betriebsende hin oder von diesem weg bewegt zu werden.

13. Küchengerät nach einem der vorhergehenden Ansprüche, wobei der Verriegelungsmechanismus Folgendes umfasst: einen Übermittelpunktmechanismus; eine physische Verriegelung; einen Knopf; und/oder ein Mittel, das der Umformung des Betriebsendes in einen Löffelkopf und/oder einen Spatelkopf durch Reibung entgegenwirkt.

14. Küchengerät nach einem der vorhergehenden Ansprüche, wobei der Rahmen aus Folgendem gebildet ist: Holz, rostfreiem Stahl und/oder geformtem Kunststoff.

15. Küchengerät nach einem der vorhergehenden Ansprüche, das mindestens eine Teilstrichmarkierung umfasst, die eine Position des Stellglieds angibt, die einem vorbestimmten Volumen entspricht, wenn das Betriebsende in der ersten Konfiguration angeordnet ist, und vorzugsweise wobei das Verriegelungselement dafür ausgelegt ist, den Löffelkopf in mindestens zwei verschiedenen Positionen zu halten, die unterschiedlichen Volumina entsprechen.

## Revendications

1. Ustensile de cuisine (100) comprenant :
une poignée (104) ;
une extrémité opérationnelle pour préparer des produits alimentaires, l'extrémité opérationnelle étant transformable entre une première configuration comprenant une cuillère (202) et une deuxième configuration comprenant une tête de spatule (102) ; et
un mécanisme de retenue (206) agencé de façon à retenir l'extrémité opérationnelle dans au moins une configuration parmi les première et deuxième configurations.

2. Ustensile de cuisine selon la revendication 1, comprenant en outre un actionneur agencé de façon à affecter la transformation de l'ustensile entre les première et deuxième configurations.

3. Ustensile de cuisine selon une quelconque revendication précédente, l'extrémité opérationnelle comprenant :
un cadre ; et
une membrane déformable couplée au cadre, la membrane formant une surface de travail de l'extrémité opérationnelle.

4. Ustensile de cuisine selon la revendication 3, comprenant en outre un élément transformateur apte à être opéré par l'actionneur afin de déformer la membrane déformable dans le but de transformer l'extrémité opérationnelle entre les première et deuxième configurations.

5. Ustensile de cuisine selon une quelconque revendication précédente, l'élément transformateur comprenant un élément de dos, apte à être opéré par l'actionneur afin d'adopter une forme sensiblement incurvée dans la première configuration, et apte à être opéré en outre par l'actionneur afin d'adopter une forme sensiblement rectiligne dans la deuxième configuration.

6. Ustensile de cuisine selon la revendication 5, une nervure ou une jonction transversale étant couplée à la membrane déformable et/ou au dos, la nervure ou la jonction transversale étant agencée de façon à être déformée par le dos, et/ou étant agencée de façon à être sensiblement perpendiculaire à l'élément transformateur.

7. Ustensile de cuisine selon la revendication 5, l'élément de dos étant abrité dans un canal dans la membrane déformable, et l'élément transformateur étant agencé de façon à déformer la membrane déformable en vertu d'une translation pour se mettre dans la membrane déformable ou en vertu d'une translation pour se mettre hors de la membrane déformable.

8. Ustensile de cuisine selon une quelconque revendication précédente, la membrane déformable comprenant une matière élastique, de préférence une matière élastomère, et de grande préférence comprenant : du caoutchouc ; de la silicone ; une matière plastique ; du bois ; et/ou un métal.

9. Ustensile de cuisine selon une quelconque revendication précédente, l'élément transformateur étant flexible, et de préférence l'élément transformateur étant formé à partir de bois, de matière plastique et/ou de métal.

10. Ustensile de cuisine selon une quelconque revendication précédente, la poignée abritant l'actionneur et/ou l'élément transformateur et/ou le mécanisme de verrouillage, et de préférence l'actionneur et/ou l'élément transformateur faisant saillie depuis une extrémité de la poignée, et étant agencé pour être librement soumis à une translation à l'intérieur de la poignée le long de sa longueur.

11. Ustensile de cuisine selon une quelconque revendication précédente, l'élément transformateur étant couplé, de préférence de manière pivotante, au cadre rigide.

12. Ustensile de cuisine selon une quelconque revendication précédente, l'actionneur étant couplé à l'élément transformateur, l'actionneur étant agencé de façon à être soumis à une translation pour se rapprocher ou s'éloigner de la poignée et/ou de l'extrémité opérationnelle.

13. Ustensile de cuisine selon une quelconque revendication précédente, le mécanisme de verrouillage comprenant : un mécanisme décentré ; un loquet physique ; un bouton ; et/ou un moyen pour opposer la transformation de l'extrémité opérationnelle en une tête de cuillère et/ou une tête de spatule par friction.

14. Ustensile de cuisine selon une quelconque revendication précédente, le cadre étant formé à partir de : bois ; acier inoxydable ; et/ou matière plastique moulée.

15. Ustensile de cuisine selon une quelconque revendication précédente, comprenant au moins un marquage de graduation indiquant une position de l'actionneur qui correspond à un volume prédéterminé lorsque l'extrémité opérationnelle est agencée dans la première configuration, et de préférence l'élément de verrouillage étant agencé de façon à retenir la tête de cuillère dans au moins deux positions différentes correspondant à des volumes différents.
